# EUROPEAN PATENT SPECIFICATION

(11) **EP 2 008 882 B1**
(45) Date of publication and mention of the grant of the patent: **20.01.2010**
(21) Application number: 07380198.7
(22) Date of filing: 29.06.2007
(51) Int. Cl.: B60R 21/239

(54) **Adaptive airbag with multi-venting**
Adaptiver Airbag mit Mehrfachbelüftung
Airbag adaptatif avec ventilation multiple

(43) Date of publication of application: 31.12.2008
(73) Proprietor: Dalphi Metal España, S.A., 28006 Madrid (ES)
(72) Inventor: Arez, Luis, 47151 Valladolid (ES); Denys, Isabelle, 47151 Valladolid (ES); Mirones, Ramon, 47151 Valladolid (ES)
(74) Representative: Mehnert, Bernhard

(56) References cited:
- EP-A- 0 398 028
- EP-A- 0 841 226
- GB-A- 2 353 008
- US-A- 5 634 659
- US-B1- 6 447 006

## Description

### Field of the Invention

The present invention relates to an airbag module used in automobiles to dampen impacts experienced by drivers and passengers in the event of impacts or collisions, and more particularly to an airbag module that can be adapted to impacts or collisions of different severities.

### Background of the Invention

An airbag module basically consists of a folded cushion that is quickly inflated by means of a gas produced by a generator when certain sensor devices detect a collision of the vehicle. The cushion is thus deployed between the occupant of the vehicle and an area of the vehicle, protecting him or her during the collision.

In the normal operation of deployment of the cushion, the internal pressure produced by the generator when the cushion is filled with gas may be high enough to cause the cushion to be so hard that the occupant bounces off it. To prevent this drawback, they have been provided with a venting opening serving to reduce internal pressure of the cushion and, accordingly, the possibility of causing injuries when they are activated.

The use of several means for blocking this venting opening is in turn known to achieve better control of the internal pressure in the cushion than that provided by only the variation of the size of the opening. In this sense, the use of patches for achieving that the gas does not exit the discharge opening immediately but rather when the patch breaks as a given pressure inside the cushion has been reached, must be pointed out. The art has proposed different types of patches with different means for controlling the breaking thereof according, to a greater or lesser extent, to a certain resistance to the gas pressure inside the cushion. The presence of the gas pressure required for the cushion to carry out its protective function is thus made compatible with the assurance that the gas pressure will not reach an excessive value, with the risk for the people for whom the cushion is deployed.

Additionally, the need for venting devices that allow increasing the gas outlet flow according to the specific characteristics of each collision and the type of passenger involved has also arisen, and to that effect several venting device solutions providing venting openings with an adjustable surface facilitating the increase of the venting area as the internal pressure in the cushion increases are also known.

A newly arisen need involves the need for airbags that allow reducing the venting area, even completely eliminating it, in certain impact conditions, which requires sealing mechanisms that must function in the sense opposite to those indicated. The traditional previously mentioned patches had to completely seal the outlet opening until the internal gas pressure inside the cushion reached a given level and then they broke, no longer functioning; now the opposite is required: devices that allow sealing the venting opening in certain situations. Some proposals to that effect are known, such as the following.

Spanish patent ES 2,182,629, US patent 6,139,048, US patent application 2004/0090054, patent application WO 2006/024472 and US patent application 2006/0151979 describe devices using moving elements to seal the venting opening using the stress produced in the cushion due to the pressure difference together with the difference of how the occupant strikes the airbag.

Patent applications EP 1,640,221 and WO 2007/003418 describe passive venting control mechanisms using elements which seal the venting opening when certain conditions arise.

US 5 634 659 discloses an airbag comprising a number of rent holes intended to permit gas within the bag to escape, thereby reducing the risk of the occupant rebounding at the airbag.

One drawback of the mentioned proposals is that they lack that capacity to adapt to different impact configurations. The present invention aims to solve this drawback.

### Summary of the Invention

An object of the present invention is to provide an airbag module with a venting that can adjust to different impact or collision severity conditions. It aims to take into consideration the different impact configurations and the developments provided therein (increase of the impact velocity, barrier change,...) contemplated by the administrative regulations and/or those developments demanded by the consumers.

Another object of the present invention is to provide an airbag module which allows reducing gas leaks to the exterior to increase their performance.

Another object of the present invention is to provide an airbag module configured to protect an occupant of a vehicle against a side impact which allows controlling the stress applied on the occupant's side, i.e. the chest, abdomen or pelvis as required. Controlling the stress allows preventing injuries to the occupant.

Another object of the present invention is to provide an airbag module configured to protect an occupant of a vehicle against a frontal impact which allows controlling the stress applied on the occupant, preventing injuries to the occupant.

These and other objects are achieved by means of an airbag module for an automotive vehicle comprising an inflatable cushion which is inflated with the gas produced by a generator when a collision occurs and which is configured to be deployed between an occupant of the vehicle and an area of the vehicle, in which the cushion includes a venting area with a surface Su distributed in a plurality of venting openings, the sum of their perimeters being comprised between 4 and 40 times the perimeter of a circle with surface Su.

In a preferred embodiment of the invention, said openings are arranged close to the perimetral edges of the two main panels so that, in normal conditions, they are not closed during deployment of the cushion. This allows providing side or frontal airbags with the capacity to adapt to collisions having different severities without needing to use specific closing devices for the venting area.

An advantage of the present invention is that the adaptivity of the airbag module to the impact conditions is that it is passive and therefore requires no signal to be activated.

Another advantage of the present invention is the possibility of obtaining an adaptive performance of the airbag module without needing to use any specific sealing mechanism for the venting openings like in most proposals of the prior art. This does not mean that airbag modules according to the present invention cannot be used with a large number of venting openings in the cushion which also use specific sealing mechanisms, for example, for a group of openings arranged in a specific location.

Another advantage of the present invention is the low cost involved for providing a conventional airbag module able to adapt to the impact conditions.

Other features and advantages of the present invention will be understood from the following detailed description of several illustrative and by no means limiting embodiments of its object in relation to the attached drawings.

### Description of the Drawings

Figure 1a shows a schematic cross-sectional view of a side airbag according to the prior art.
Figure 1b shows a schematic cross-sectional view of a side airbag according to the present invention.
Figure 2a shows a schematic perspective view of a frontal airbag according to the prior art.
Figure 2b shows a schematic perspective view of a frontal airbag according to the present invention.
Figures 3a and 3b show stress-displacement diagrams showing the adaptive capacity of a side airbag module according to the present invention.

### Detailed Description of the Invention

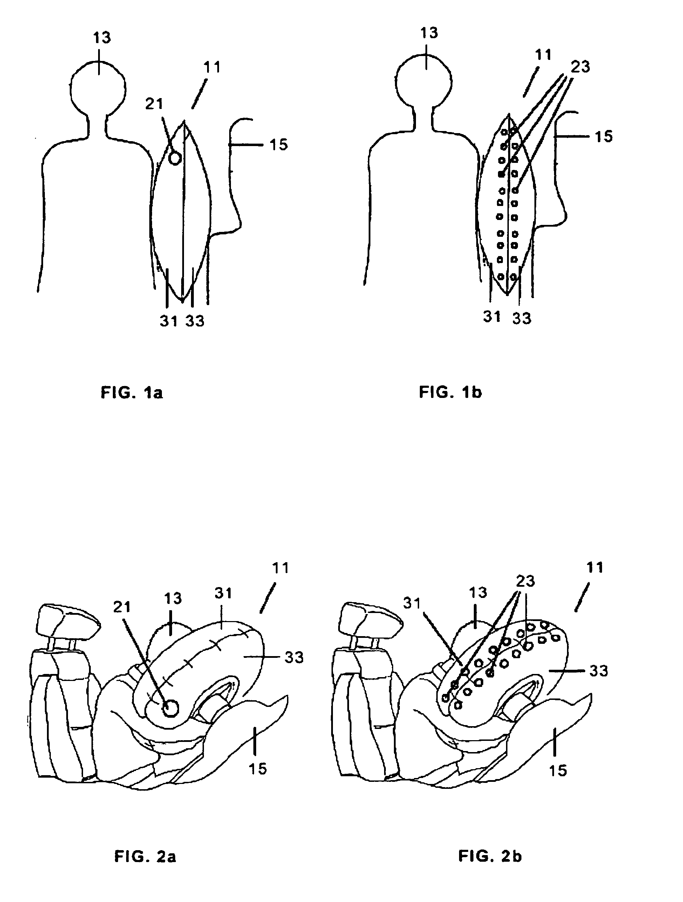

A typical side airbag module, such as the one shown in Figure 1a, comprises an inflatable cushion 11 which is inflated with the gas produced by a generator (not shown) when a collision occurs and is configured to deploy between an occupant 13 and an area 15 of the body of the vehicle. Even though the cushion 11 is shown in Figure 1a with a single chamber for the sake of simplicity, it is usually structured with two or more chambers to obtain more efficient protection of the occupant's head, chest and pelvis, which involve different problems in the case of side impacts. As is shown in Figure 1a, the inflatable cushion 11 includes a venting opening 21 provided with sealing patches or not.

According to the present invention, rather than a single venting opening (or a small number of venting openings), and as is shown in Figure 1b, the cushion 11 comprises a plurality of venting openings 23, providing as a group a venting area with a surface Su similar to that of the venting opening 21 of the cushion 11 of the side airbag module known in the prior state of the art, which is determined by the general features of the airbag module in question.

When the cushion 11 is impacted when it makes contact with the occupant 13, the gas exiting through the venting area has a certain exit speed that is proportional to the energy of the impact.

In side airbag modules known in the art with a single venting opening 21 (or a low number of venting openings), this speed increases as the energy of the system increases.

However, in the side airbag module according to the present invention, when the cushion 11 makes contact with the occupant 13, the exit speed of the gas through the venting openings 23 does not increase due to the fact that the friction of the exiting gas with the edges of the venting openings 23 dissipates part of the energy of the system, favoring the adaptive performance of the module. The greater is the sum of the perimeters of the venting openings 23, the greater is the friction of the gas with their edges.

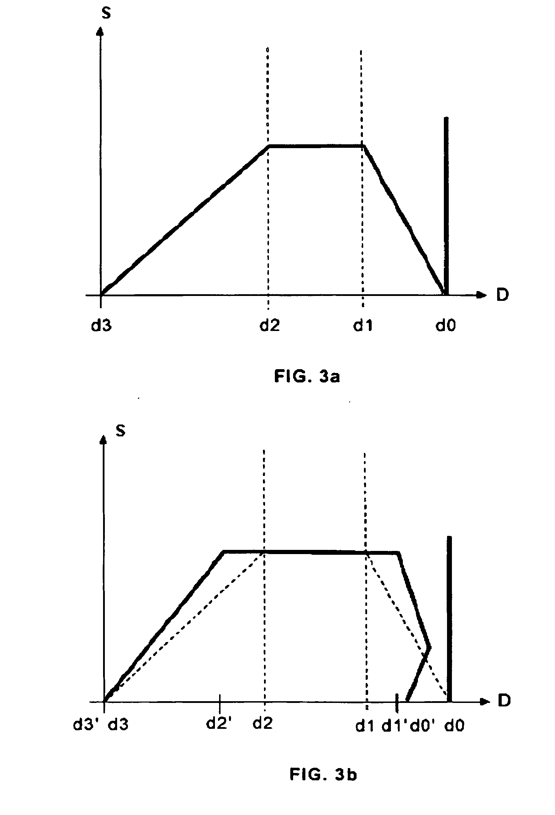

The improvement of the adaptivity of the side airbag module according to the invention is shown in Figures 3b and 3a, respectively showing stress (S)/displacement (D) graphs of a side airbag with and without the capacity of adapting to impacts with different degrees of severity, where S is the stress applied by the cushion of the airbag on the occupant and D is the position of the occupant in relation to the vehicle door.

Figure 3a shows three sections in the graph as a result of the evolution of the pressure in the cushion: in a first section, between displacement d3 when the cushion of the airbag makes contact with the occupant, and displacement d2, the stress S increases constantly as a result of the increase of the gas pressure; in a second section, between displacement d2 and displacement d1, the stress S is constant as the increase of the gas pressure is compensated with the leaks through the venting opening, the fabric of the cushion and, where applicable, through the seams joining the two panels; in the final section, between displacement d1 and displacement d0, in which the occupant would make contact with the vehicle door, the stress decreases constantly when the gas pressure inside the cushion decreases.

In Figure 3b, including together with the graph of the side airbag according to the present invention the graph of Figure 3a represented with dotted lines in the section that does not match up, the following differences can be seen in relation to Figure 3a:
- In the first section, between displacement d3' and displacement d2', it ends sooner since the venting to the exterior is stopped by the friction of the gas with the edges of the venting openings.
- In the second section, it ends later in displacement d1' since the pressure of the cushion is maintained for a longer time due to the increase of the friction of the gas with the edges of the venting openings.
- In the third section, a certain volume of gas is maintained inside the cushion, which prevents contact between the occupant and the vehicle door. It therefore ends sooner in displacement d0'.

This performance of the cushion allows it to effectively protect a single occupant in different impact configurations with different intrusion speeds, for example, an impact configuration with two types of barrier and two speeds or an impact configuration with a barrier and three speeds.

In an embodiment of the invention, the cushion 11 includes 35 circular openings 23 6 mm in diameter which provide a venting area equivalent to that of a circular opening 35 mm in diameter. The sum of the perimeters of said 35 openings is 659.72 mm and that of the opening with an equivalent surface of 109.95, the ratio between them thus being 6.01/1.

In another embodiment of the invention, the cushion 11 includes 75 circular openings 4.1 mm in diameter which provide a venting area equivalent to that of a circular opening 35.5 mm in diameter. The sum of the perimeters of said 75 openings is 966.2 mm and that of the opening with an equivalent surface is 111.52, the ratio between them thus being 8.66/1.

The greater the mentioned ratio, the greater the friction will be between the gas and the edges of the openings 23 and the reduction of the outlet speed of the gas will be more visible. However, the number of openings 23 can be limited by a minimum size imposed by the technique used to carry them out. In this sense, for example, for circular openings the use of laser cutting techniques implies a minimum diameter of about 2 mm, and the use of perforation techniques implies a minimum diameter of about 1 mm.

According to the tests conducted by the applicant, it is estimated that in order to obtain good results, the number and sizes of the openings 23 must be such that the sum of their perimeters is comprised between 4 and 40 times, and preferably between 6 and 18 times, the perimeter of a circle with an equal surface as the sum Su of its surfaces, i.e. the venting area of the cushion 11.

The venting openings 23 can be located in any area of the cushion 11 which foreseeably does not make contact with the occupant 13 or with the area 15 of the body of the vehicle to prevent said openings 23 from being closed during deployment of the cushion 11 when a collision occurs.

Figure 1b shows a preferred location of the openings 23 along hypothetical lines that are considerably parallel and close to the perimetral edges of the front and rear panels 31, 33 forming the cushion 11.

The openings 23 preferably have a circular shape and will be equal to one another.

In the case of an airbag module intended to protect the occupant of a vehicle against a frontal impact, such as the driver's airbag shown in Figures 2a and 2b, the first one known in the art and the second one according to the present invention, and particularly with regard to the venting openings 23 and their effects, all considerations carried out on the side airbag module are applied hereto, so an additional description is not necessary.

Although several embodiments of the invention have been described and shown, modifications comprised within the scope thereof can be introduced, and the scope should not be held as being limited to said embodiment but rather to the content of the following claims.

## Claims

1. An airbag module for an automotive vehicle comprising an inflatable cushion (11) which is inflated with the gas produced by a generator when a collision occurs and which is configured to deploy between an occupant (13) of the vehicle and an area (15) of the vehicle, **characterized in that** the cushion (11) includes a venting area with surface Su distributed in a plurality of openings (23), the sum of their perimeters being comprised between 4 and 40 times the perimeter of a circle with surface Su.

2. An airbag module for an automotive vehicle according to claim 1, **characterized in that** the sum of the perimeters of said openings (23) is comprised between 6 and 18 times the perimeter of a circle with surface Su.

3. An airbag module for an automotive vehicle according to any of claims 1-2, **characterized in that** said openings (23) have a considerably circular shape.

4. An airbag module for an automotive vehicle according to any of claims 1-3, **characterized in that** said openings (23) are all equal.

5. An airbag module for an automotive vehicle according to any of claims 1-4, **characterized in that** said openings (23) are located in those parts of the cushion (11) which foreseeably do not make contact with the occupant (13) or with said area (15) of the vehicle during deployment of the cushion (11) when a collision occurs.

6. An airbag module for an automotive vehicle according to claim 6, the cushion (11) comprising a front panel (31) intended to make contact with the occupant (13) and a rear panel (33) joined at their perimetral edges, **characterized in that** said openings (23) are located in both panels (31, 33) close to their perimetral edges.

7. An airbag module for an automotive vehicle according to claim 6 wherein said openings (23) are arranged along hypothetical lines parallel to the perimetral edges of both panels (31, 33), with a considerably equal separation between contiguous openings (23).

8. An airbag module for an automotive vehicle according to any of claims 1-7, **characterized in that** it is configured to protect the occupant (13) in the event of a frontal impact.

9. An airbag module for an automotive vehicle according to any of claims 1-7, **characterized in that** it is configured to protect the occupant (13) in the event of a side impact.

## Patentansprüche

1. Airbagmodul für ein Kraftfahrzeug, umfassend ein aufblasbares Kissen (11), das mit dem Gas, das von einem Generator erzeugt wird, wenn es zu einer Kollision kommt, aufgeblasen wird und das so gestaltet ist, dass es sich zwischen einem Insassen (13) des Fahrzeugs und einem Bereich (15) des Fahrzeugs entfaltet, **dadurch gekennzeichnet, dass** das Kissen (11) einen Entlüftungsbereich mit der Fläche Su umfasst, die auf eine Vielzahl von Öffnungen (23) verteilt ist, wobei die Summe von deren Umfängen das 4- bis 40fache des Umfangs eines Kreises mit der Fläche Su beträgt.

2. Airbagmodul für ein Kraftfahrzeug nach Anspruch 1, **dadurch gekennzeichnet, dass** die Summe der Umfänge der Öffnungen (23) das 6- bis 18fache des Umfangs eines Kreises mit der Fläche Su beträgt.

3. Airbagmodul für ein Kraftfahrzeug nach einem der Ansprüche 1 bis 2, **dadurch gekennzeichnet, dass** die Öffnungen (23) eine im Wesentlichen kreisrunde Form haben.

4. Airbagmodul für ein Kraftfahrzeug nach einem der Ansprüche 1 bis 3, **dadurch gekennzeichnet, dass** die Öffnungen (23) alle gleich sind.

5. Airbagmodul für ein Kraftfahrzeug nach einem der Ansprüche 1 bis 4, **dadurch gekennzeichnet, dass** sich die Öffnungen (23) in den Abschnitten des Kissens (11) befinden, die während des Entfaltens des Kissens (11) bei Auftreten einer Kollision vorhersehbarerweise nicht mit dem Insassen (13) oder mit dem Bereich (15) des Fahrzeugs in Berührung kommen.

6. Airbagmodul für ein Kraftfahrzeug nach Anspruch 6, wobei das Kissen (11) eine vordere Stoffbahn (31), die dafür bestimmt ist, mit dem Insassen (13) in Berührung zu kommen, und eine hintere Stoffbahn (33) umfasst, die an ihren Umfangsrändern verbunden sind, **dadurch gekennzeichnet, dass** sich die Öffnungen (23) in beiden Stoffbahnen (31, 33) nahe bei deren Umfangsrändern befinden.

7. Airbagmodul für ein Kraftfahrzeug nach Anspruch 6, bei dem die Öffnungen (23) längs hypothetischer, zu den Umfangsrändern beider Stoffbahnen (31, 33) paralleler Linien mit einem im Wesentlichen gleichen Abstand zwischen benachbarten Öffnungen (23) angeordnet sind.

8. Airbagmodul für ein Kraftfahrzeug nach einem der Ansprüche 1 bis 7, **dadurch gekennzeichnet, dass** es so gestaltet ist, dass es den Insassen (13) bei einem Frontalaufprall schützt.

9. Airbagmodul für ein Kraftfahrzeug nach einem der Ansprüche 1 bis 7, **dadurch gekennzeichnet, dass** es so gestaltet ist, dass es den Insassen (13) bei einem Seitenaufprall schützt.

## Revendications

1. Module d'airbag pour un véhicule automoteur comprenant un coussin gonflable (11) qui est gonflé avec le gaz produit par un générateur lorsqu'une collision survient et qui est configuré pour se déployer entre un occupant (13) du véhicule et une zone (15) du véhicule, **caractérisé en ce que** le coussin (11) comprend une zone d'évacuation présentant une surface Su distribuée en une pluralité d'ouvertures (23), la somme de leurs périmètres étant comprise entre 4 et 40 fois le périmètre d'un cercle présentant la surface Su.

2. Module d'airbag pour un véhicule automoteur selon la revendication 1, **caractérisé en ce que** la somme des périmètres desdites ouvertures (23) est comprise entre 6 et 18 fois le périmètre d'un cercle présentant la surface Su.

3. Module d'airbag pour un véhicule automoteur selon l'une quelconque des revendications 1-2, **caractérisé en ce que** lesdites ouvertures (23) présentent une forme considérablement circulaire.

4. Module d'airbag pour un véhicule automoteur selon l'une quelconque des revendications 1-3, **caractérisé en ce que** lesdites ouvertures (23) sont toutes identiques.

5. Module d'airbag pour un véhicule automoteur selon l'une quelconque des revendications 1-4, **caractérisé en ce que** lesdites ouvertures (23) sont localisées en des endroits du coussin (11) dont on peut prévoir qu'ils n'entreront pas en contact avec l'occupant (13) ou avec ladite zone (15) du véhicule pendant le déploiement du coussin (11) lorsqu'une collision survient.

6. Module d'airbag pour un véhicule automoteur selon la revendication 6, le coussin (11) comprenant un panneau frontal (31) destiné à entrer en contact avec l'occupant (13) et un panneau arrière (33) reliés au niveau des bords de leur périmètre, **caractérisé en ce que** lesdites ouvertures (23) sont localisées dans les deux panneaux (31, 33) à proximité des bords de leur périmètre.

7. Module d'airbag pour un véhicule automoteur selon la revendication 6, où lesdites ouvertures (23) sont disposées le long de lignes hypothétiques parallèles aux bords du périmètre des deux panneaux (31, 33), avec une séparation considérablement identique entre des ouvertures contiguës (23).

8. Module d'airbag pour un véhicule automoteur selon l'une quelconque des revendications 1-7, **caractérisé en ce qu'**il est configuré pour protéger l'occupant (13) dans le cas d'un impact frontal.

9. Module d'airbag pour un véhicule automoteur selon l'une quelconque des revendications 1-7, **caractérisé en ce qu'**il est configuré pour protéger l'occupant (13) dans le cas d'un impact latéral.
